# EUROPÄISCHE PATENTSCHRIFT

(11) **EP 2 986 565 B1**
(45) Veröffentlichungstag und Bekanntmachung des Hinweises auf die Patenterteilung: **13.03.2019**
(21) Anmeldenummer: 14720263.4
(22) Anmeldetag: 04.04.2014
(51) Int. Cl.: C02F 1/32

(54) **UV-STRAHLERMODUL MIT AUSWECHSELBAREN STRAHLEREINHEITEN**
UV LAMP MODULE WITH EXCHANGEABLE LAMP UNITS
MODULE ÉMETTEUR DE RAYONNEMENT ET UNITÉS D'ÉMISSION DE RAYONNEMENT INTERCHANGEABLES

(30) Priorität: 18.04.2013 DE 102013006635
(43) Veröffentlichungstag der Anmeldung: 24.02.2016
(73) Patentinhaber: Xylem IP Holdings LLC, Rye Brook, NY 10573 (US)
(72) Erfinder: KRÜGER, Friedhelm, 32657 Lemgo (DE); BECKMANN, Heike, 33739 Bielefeld (DE)
(74) Vertreter: Lenzing Gerber Stute
(86) Internationale Anmeldenummer: PCT/IB2014/060432
(87) Internationale Veröffentlichungsnummer: WO 2014/170788

(56) Entgegenhaltungen:
- EP-A1- 1 661 862
- WO-A1-2010/006428
- WO-A1-2012/045148
- WO-A2-98/46933

## Beschreibung

Die vorliegende Erfindung betrifft ein UV-Strahlermodul mit den Merkmalen des Oberbegriffs des Anspruchs 1.

Die keimtötende, desinfizierende Wirkung von UV-Strahlung ist seit langem bekannt. UV-Strahler werden seit vielen Jahrzehnten für die Desinfektion von Trinkwasser und Abwasser, in Klimaanlagensümpfen und zur Desinfektion von Arbeitsbereichen in biologischen Laboratorien eingesetzt. Bei der Desinfektion von Wasser wird UV-Strahlung erzeugt und in das Wasser abgegeben, so dass Keime (Viren, Bakterien, Einzeller) abgetötet werden. Nahezu alle Wasserentkeimungsanlagen werden mit UV-Strahlern betrieben, die als Gasentladungslampen mit einem Quecksilberanteil in der Gasfüllung ausgebildet sind. Quecksilber produziert unter anderem eine dominante Emissionsline bei 254 nm, die nahe bei einem Maximum der wellenlängenabhängigen Wirksamkeit von UV-Licht zur Desinfektion von Mikroorganismen liegt.

Zum Schutz vor direktem Kontakt mit Wasser und zur Temperaturisolation sind die Strahler von Hüllrohren umgeben. Diese Hüllrohre sowie die Strahler selbst sind aus UV-durchlässigem Material gefertigt, wobei im Regelfall Quarz eingesetzt wird.

Bei Strahlern kommen hauptsächlich zwei Bauarten zum Einsatz, nämlich sogenannte Niederdruckstrahler, die mit einem Gasdruck von weniger als etwa 0,1 mbar betrieben werden und sogenannte Mitteldruckstrahler, deren interner Druck etwa 0,1-10 bar beträgt. Niederdruckstrahler zeichnen sich durch einen sehr hohen elektrischen Wirkungsgrad aus, da rund 40% der gesamten aufgenommenen elektrischen Leistung in Strahlungsleistung der genannten Wellenlänge umgesetzt wird.

Da die absolute Strahlungsleistung im Verhältnis zur Baugröße relativ gering ist, wird für eine Desinfektionsanlage mit großem Durchsatz an Wasser eine Vielzahl von Niederdruckstrahlern eingesetzt. Dabei werden die Strahler in den Quarzhüllrohren in sogenannten Strahlerbänken angeordnet. Diese Anordnung wird eingesetzt zur Desinfektion von UV-Bestrahlungsgerinnen. Gerinne sind drucklose, nach oben offene Kanäle in denen Abwasser langsam und mit annähernd gleicher Geschwindigkeit über den Querschnitt fließt. Der Wasserspiegel wird dabei konstant gehalten. Durch die gleichmäßig verteilten Strahler kann man innerhalb bestimmter Abschnitte eine Zone einheitlicher Raumbestrahlung im Bestrahlungsgerinne erzeugen. Diese nahezu homogene Raumbestrahlung wird im Wesentlichen durch die Strahlereinzelleistung, die Abstände der Strahler voneinander, die Strömungsgeschwindigkeit und die UV-Transmissionsfähigkeit des zu bestrahlenden Wassers bestimmt. Die Länge von solchen Strahlern beträgt ca. 1,5 m und in kommerziellen Anlagen wird normalerweise eine Vielzahl von Strahlern, teilweise über 100 Stück, eingesetzt.

Die Offenlegungsschrift DE 199 57 073 A1 offenbart zum Beispiel eine UV-Strahlerkonfiguration zum Einbau in ein Bestrahlungsgerinne, bestehend aus rahmenfreien Strahlermodulen mit daran mittels Steckverbindungen fliegend angeordneten UV-Strahlern, wobei die UV-Strahler parallel zur Strömungsrichtung angeordnet sind und über eine Hebeöse an der Konfigurationssäule nach oben aus dem Gerinne gezogen werden können. Die Strahler können auch horizontal und quer zu der Strömungsrichtung liegen, siehe Patentschrift US 4,367,410. Schließlich gibt es Anlagen, bei denen die Strahler senkrecht in dem Kanal stehen oder hängen, z.B. in den Patentschriften US 5,660,719 und US 5,332,388.

Ein Strahler mit Hüllrohr, Kopfteil und Verbindungselementen wird nachfolgend als Strahlereinheit bezeichnet. Die Baugruppe aus mehreren UV-Strahlern bildet ein Modul, wobei mehrere Module als Strahlerbank bezeichnet werden. Module müssen zu Wartungszwecken aus dem Kanal gehoben werden, um beispielsweise einzelne Lampen auszutauschen oder die Strahleroberfläche zu reinigen. Module können dabei aus dem Kanal manuell oder maschinell herausgehoben oder herausgeschwenkt werden. In dem Modul selbst sind die Strahler durch Schraubverbindungen gehalten. Diese Schraubverbindungen haben als Nachteil, dass Wartungsarbeiten zeitintensiv sind. Solche Schraubverbindungen sind beispielsweise aus WO 2010/006428 A1 bekannt.

WO 98/46933 A2 offenbart ein UV-Strahlermodul mit einer Befestigungsplatte mit Ausnehmungen, durch die sich jeweils ein UV-Strahler einer Strahlereinheit erstreckt, wobei die Befestigungsplatte Gewindebuchsen hat, die die Ausnehmungen teilweise bilden und wobei jede Strahlereinheit mittels einer Wurfmutter und der Gewindebuchse an der Platte lösbar verbindbar ist.

EP 1 661 862 A1 offenbarte eine Reaktorkammer zur Desinfektion von Flüssigkeiten mit einer Anzahl von UV-Strahlereinheiten. Neben der Reaktorkammer ist eine Vorkammer vorgesehen, die einen Boden trägt. Der Boden ist durchsetzt von Öffnungen, in die jeweils eine Strahleranordnung in wasserdichter Weise eingesetzt ist. Die Verbindung der Strahleranordnung erfolgt über Flansche.

WO 2010/006428 A1 offenbart einen UV-Strahlermodul mit einem Rahmen und mit wenigstens zwei Strahlereinheiten wobei für jede Strahlereinheit eine Befestigungseinrichtung mit Befestigungselementen vorgesehen ist, mit der die Strahlereinheit im Bereich des Kopfteils mit dem Rahmen lösbar verbindbar ist. Der Rahmen weist Öffnungen zur Aufnahme der Befestigungselemente auf.

Es ist eine Aufgabe der vorliegenden Erfindung ein UV-Strahlermodul so weiterzuentwickeln und bereitzustellen, dass der Austausch der UV-Strahler im Modul schnell und einfach zu handhaben ist.

Diese Aufgabe wird von einem UV-Strahlermodul mit den Merkmalen des Anspruchs 1 gelöst.

Danach ist ein UV-Strahlermodul mit einem Rahmen und mit wenigstens zwei Strahlereinheiten, wobei jede Strahlereinheit einen in einer Axialrichtung sich erstreckenden UV-Strahler, ein den UV-Strahler umgebendes Hüllrohr, elektrische Anschlüsse und ein Kopfteil zur Befestigung des Strahlereinheit an dem Rahmen aufweist, vorgesehen, das für jede Strahlereinheit eine Befestigungseinrichtung aufweist, mit der die Strahlereinheit im Bereich des Kopfteils mit dem Rahmen lösbar verbindbar ist, wobei zur Aufnahme der Befestigungselemente der Rahmen Öffnungen aufweist und die Befestigungselemente Haken umfassen.

Das erfindungsgemäße Strahlermodul erlaubt einen einfachen und schnellen Austausch der Strahlereinheiten im Modul.

Eine bevorzugte Ausführungsform der Erfindung wird nachfolgend anhand der Zeichnungen näher erläutert. Gleiche Funktionselemente tragen dabei gleiche Bezugszeichen. Es zeigen:
- Fig. 1:: eine perspektivische Darstellung eines Strahlermoduls mit acht Strahlereinheiten, (nicht erfindungsgemäß);
- Fig. 2:: eine perspektivische Darstellung eines Strahlerkopfs, (nicht erfindungsgemäß);
- Fig. 3:: einen Längsschnitt eines Strahlerkopfs, (nicht erfindungsgemäß);
- Fig. 4:: eine perspektivische Darstellung des zu Fig. 2 und 3 gehörigen Strahlers mit Verbindungselementen,
- Fig. 5:: einen Längsschnitt eines Strahlerkopfs, (nicht erfindungsgemäß);
- Fig. 6:: eine perspektivische Darstellung des erfindungsgemäßen Strahlerkopfs aus Fig. 5,
- Fig. 7:: eine perspektivische Darstellung des zu Fig. 5 und 6 gehörigen Strahlerhüllrohrs mit Verbindungselementen, (nicht erfindungsgemäß);
- Fig. 8: eine perspektivische Darstellung eines erfindungsgemäßen Strahlermoduls mit acht Strahlereinheiten,
- Fig. 9: einen Längsschnitt des Strahlermoduls aus Fig. 8, sowie
- Fig. 10: eine perspektivische Darstellung der Strahlereinheit aus Fig. 8 und 9.

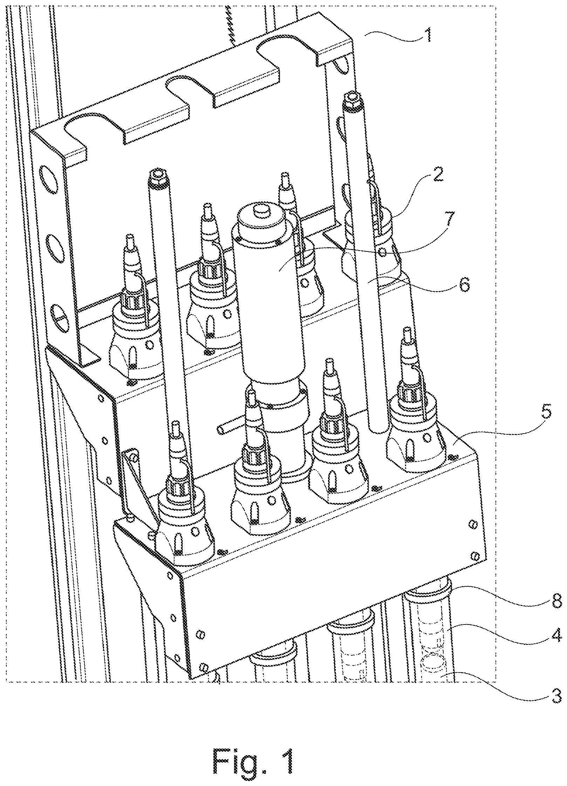

Fig. 1 zeigt ein Strahlermodul 1 mit acht parallel, in zwei Reihen angeordneten Strahlereinheiten 2 einer UV-Wasserbehandlungsanlage. Eine Strahlereinheit 2 besteht aus einem im wesentlichen radialsymmetrischen UV-Strahler 3 dessen Längserstreckung größer ist als sein Radius und der umgeben ist von einem axial zentrierten und zylindrischen Hüllrohr 4, einem Kopfteil und Verbindungselementen. Das Modul 1 ist zum Einbau in einen Kanal vorgesehen, wobei die Strahlereinheiten 2 vorzugsweise unter einem Winkel von 45° zur Wasseroberfläche positioniert werden. Die Kopfteile der Strahlereinheiten 2 mit Kabelanschlüssen ragen dabei im gleichen Abstand aus dem Wasser heraus. Das Modul 1 weist eine nicht gezeigte Bodenplatte auf, die auf dem Boden des Kanals aufsteht und die Strahlereinheiten 2 an ihrem unteren Ende abstützt. Weiterhin weist das Modul 1 einen oberen Rahmen 5 auf, in den die Strahlereinheiten 2 aufgenommen werden, sowie Längsstreben 6, die die Bodenplatte mit dem Rahmen 5 verbinden. Weiterhin ist ein Antrieb 7 vorgesehen, der eine Reinigungseinrichtung 8, wie aus dem Stand der Technik bekannt ist, pneumatisch oder hydraulisch in Längsrichtung des Hüllrohrs 4 verschiebt.

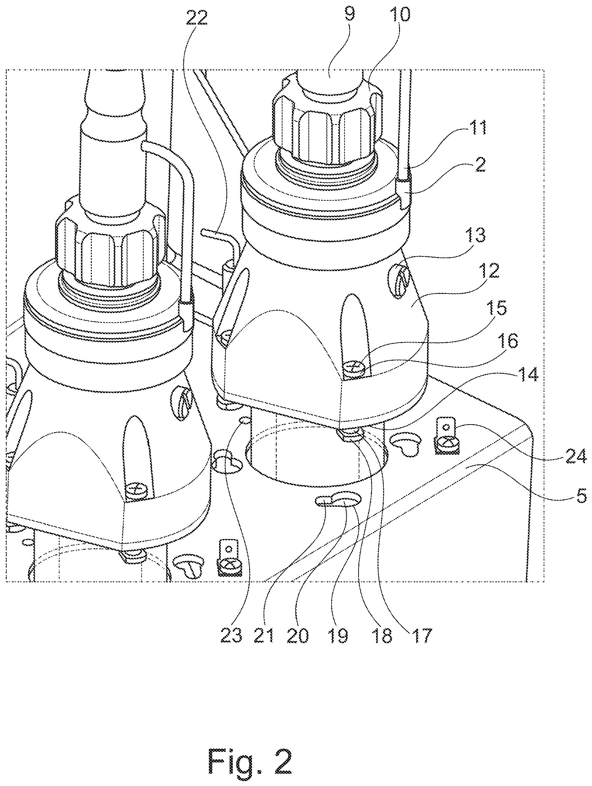

In der Figur 2 ist ein vergrößerter Ausschnitt der Figur 1 mit zwei Strahlereinheiten 2 im nicht vollständig montierten Zustand zu sehen. In Axialrichtung unterhalb eines elektrischen Anschlusses 9 mit Überwurfmutter 10 weist die Strahlereinheit 2 eine weitere Überwurfmutter 11 auf, die den hier nicht gezeigten Strahler mit einem kegelförmigen Kopfstück 12 verbindet. Das kegelförmige Kopfstück 12 ist dabei über eine Stiftschraube 13 mit dem Strahler mittelbar verbunden, so dass eine Verdrehung des Strahlers in der Strahlereinheit 2 verhindert wird. In Axialrichtung unterhalb des Kopfstücks 12 weist die Strahlereinheit 2 eine ringförmige Bodenplatte 14 auf, die mittels vier symmetrisch angeordneter Schrauben 15, bestehend aus Schraubenkopf 16 und Gewindehülse 17, an dem Kopfstück 12 befestigt ist. Weiterhin weisen diese axial orientierten Schrauben 15 an einem strahlernahen Ende der Gewindehülsen 17 Muttern 18 auf. Diese Muttern 18 sind Teil eines Drehverschlusses zwischen Kopfstück 12 und Modulrahmen 5. Dazu weist der Modulrahmen 5 entsprechende schlüssellochförmige Ausschnitte 19 mit einer Öffnung 20 und einem daran anschließenden Schlitz 21 mit geringer Breite auf. Um die Verdrehung der Strahlereinheit 2 gegenüber dem Modul 1 zu verhindern ist eine Rastvorrichtung 22 an der Außenseite des Kopfstücks 12 und eine Indexbohrung 23 im Modulrahmen 5 vorgesehen. Weiterhin weist der Rahmen 5 des Moduls 1 mehrere Masseanschlüsse 24 auf, wobei jeweils ein Anschluss 24 einer Strahlereinheit 2 zugeordnet ist. Im Folgenden werden die einzelnen Komponenten der erfindungsgemäßen Strahlereinheit 2 näher beschrieben.

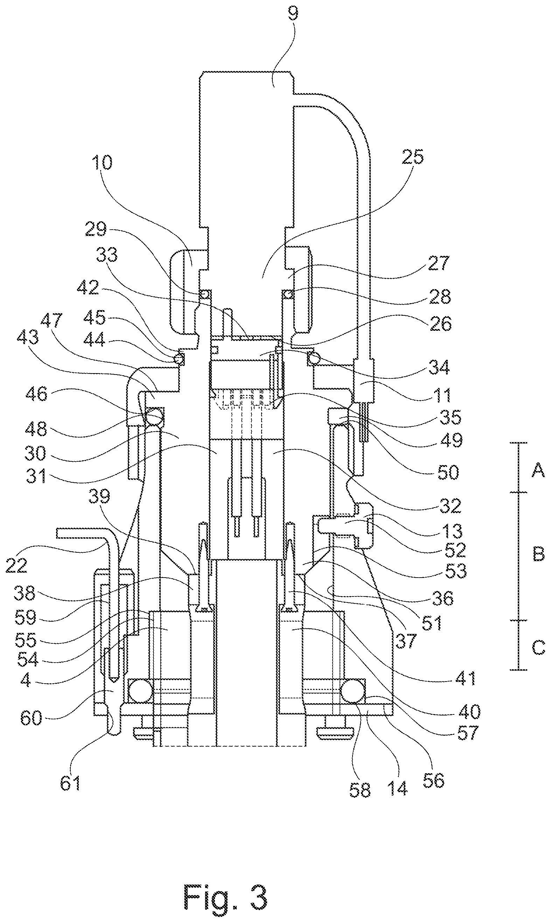

Figur 3 zeigt eine erste Ausführungsform eines Strahlermoduls. Eine zylindrische Buchse 25 des elektrischen Anschlusses 9 weist nahe ihrem strahlernahen Ende 26 einen radialsymmetrischen Vorsprung 27 mit einer strahlernahen Schulter 28 auf. In Axialrichtung unterhalb dieser Schulter 28 wird ein O-Ring 29 in Anlage gebracht, an den sich wiederrum in Axialrichtung ein rotationssymmetrisches Steckerelement 30, welches eine durchgehende zentrale Öffnung 31 aufweist, anschließt. Dabei wird die, in die Öffnung 31 aufgenommene Buchse 25 an dem Steckerelement 30 mittels der Überwurfmutter 10 befestigt, die einen oberen Teil des Steckerelements 30, den O-Ring 29 und den Vorsprung 27 umgibt. Von unten schließt sich in der Öffnung 31 ein zylindrischer Verlängerungsadapter 32 mit einem am strahlerfernen Ende 33 liegendem Stecker 34, der einen Keramiksockel 35 aufweist, an.

Damit der Kontakt zwischen Stecker 34 und Buchse 25 gewährleistet werden kann, wird das Steckerelement 30 an einem strahlernahen Ende 36, an einer strahlernahen Unterseite 37 mit dem Verlängerungsadapter 32 verschraubt. Dazu weist der Verlängerungsadapter 32 in Axialrichtung unterhalb des Steckerelements 30 einen radialen Vorsprung 38 mit Schulter 39 auf, der sich axial bis zum Ende des Verlängerungsadapters 32 erstreckt und dessen Schulter 39 in Anlage mit der strahlernahen Unterseite 37 des Steckerelements 30 steht. In Axialrichtung kurz unter dem Vorsprung 38 weist der Verlängerungsadapter 32 in seiner äußeren Wand zwei gegenüberliegende Einschnitte 40 auf. Diese in Axialrichtung länglichen Einschnitte 40 weisen eine Abmessung auf, die mit etwas Spiel der Höhe und Breite einer Befestigungsschraube 41 entspricht, so dass das Einbringen der Schraube 41 in den Einschnitt 40 zum axialen Befestigen möglich ist. Zum Festschrauben weist der Verlängerungsadapter 32 eine axiale Bohrung pro Einschnitt 40 auf, die sich auch in das Steckerelement 30 von unter her erstreckt.

In Axialrichtung unterhalb der ersten Überwurfmutter 10 weist das Steckerelement 30 einen ersten radialsymmetrischen Vorsprung 42 auf, der sich bis zu einem zweiten schmaleren radialsymmetrischen Vorsprung 43 erstreckt. Auf Höhe der oberen Hälfte des ersten Vorsprungs 42 ist eine außen liegende ringförmige Nut 44 vorgesehen, die einen O-Ring 45 aufweist. Der zweite Vorsprung 43 bildet eine strahlernahe und strahlerferne radialsymmetrische Schulter 46, 47 aus. Unterhalb der strahlernahen Schulter 46 ist eine weitere ringförmige Nut 48 vorgesehen, die einen weiteren O-Ring 49 aufnimmt. Dieser O-Ring 49 schließt oben an die strahlernahe Schulter 46 des Steckerelements 30 an und unten an eine parallel dazu liegende strahlerferne Stirnseite 50 des Kopfstücks 12.

Das Kopfstück 12 weist ebenso wie das Steckerelement 30 eine zentrierte durchgehende Öffnung 51 auf, deren Innendurchmesser mit etwas Spiel dem Außendurchmesser des Steckerelements 30 unterhalb des zweiten Vorsprungs 41 entspricht. In Axialrichtung unterhalb des zweiten Vorsprungs 43 umgibt das Kopfstück 12 das Steckerelement 30 im vollen Umfang bis zu einem strahlernahen Ende 36 des Steckerelements 30. In Axialrichtung daran anschließend überragt das Kopfstück 12 das Steckerelement 30 und umgibt einen oberen Teil des Verlängerungsadapters 32 bzw. des Hüllrohrs 4.

Zur Verbindung des Steckerelements 30 mit dem Kopfstück 12 weist die Strahlereinheit 2 neben dem O-Ring 49, eine Überwurfmutter 11 auf, die einen oberen zylindrischen Teil A des Kopfstücks 12, den O-Ring 49 und das Steckerelement 30 bis über die strahlerferne Schulter 47 umgibt. Unterhalb der Überwurfmutter 11 läuft das Kopfstück 12 in einem Bereich B kegelartig aus. Anschließend an den Bereich B weist der untere Teil C des Kopfstücks 12 einen konstanten Radius auf. In der oberen Hälfte des Bereichs B ist eine seitliche, radiale Gewindebohrung 52 vorgesehen, die das Kopfstück 12 durchsetzt. In Verlängerung der radialen Gewindebohrung 52 weist das Steckerelement 30 einen länglichen Einschnitt 53 in der äußeren Oberfläche auf, der sich bis zum strahlernahen Ende 36 des Steckerelements 30 erstreckt. Eine Stiftschraube 13 durchsetzt die Gewindebohrung 52 und den Einschnitt 53 um das Verdrehen des Strahlers gegenüber dem Kopfstück 12 zu verhindern.

Weiterhin weist die Öffnung 51 des Kopfstücks 12 in der unteren Hälfte des kegelartigen Bereichs A einen Absatz 54 auf. Dieser Absatz 54 bildet eine radialsymmetrische strahlernahe Schulter 55 aus, an die sich das Hüllrohr 4 von unten her anschließt. Dabei weist das Hüllrohr 4 einen Außenradius auf, der wesentlich größer ist als der Außenradius des im oberen Teil umgebenen Verlängerungsadapters 32. Zur Befestigung des rotationssymmetrischen Hüllrohrs 4 ist auf einer strahlernahen Stirnseite 56 des Kopfstücks 12, innenliegend, ein ringförmiger Einschnitt 57 vorgesehen, der im Zusammenspiel mit der Bodenplatte 14, eine ringförmige Nut für die Aufnahme eines abdichtenden innenliegenden O-Rings 58 bildet.

Um den Drehverschluss bezüglich Rotation zu sichern ist außenliegend am Kopfstück 12 die Rastvorrichtung 22 vorgesehen. Diese Rastvorrichtung 22 weist eine Schraubenfeder 59 und einen durch die Schraubenfeder 59 vorgespannten Raststift 60 auf, der im gezeigten, nicht arretierten Zustand durch eine Bohrung 61 in der Bodenplatte 14 hindurchragt und deutlich vorsteht.

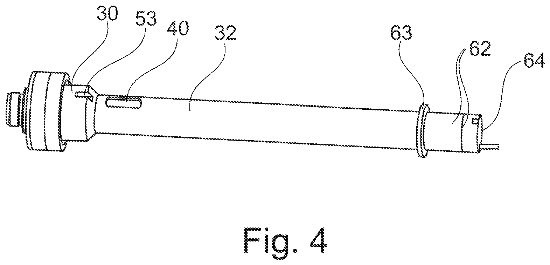

Figur 4 zeigt die räumliche Ansicht der Strahlereinheit aus Figur 3 ohne elektrischen Anschluss und Kopfstück. Deutlich zu erkennen sind der Einschnitt 53 des Steckerelements 30 und der Einschnitt 40 des Verlängerungsadapters 32. Weiterhin ist vor dem strahlernahen Ende 62 ein Zentrierring 63 gezeigt, der den Verlängerungsadapter 32 gegenüber dem, hier nicht gezeigten, Hüllrohr zentriert. Ein Anschluss 64 für einen UV-Strahler befindet sich am strahlernahen Ende 62 des Verlängerungsadapters 32. Hierbei ist anzumerken, dass abhängig von dem gewünschten Modulaufbau, die Verlängerungsadapterlänge beliebig angepasst werden kann.

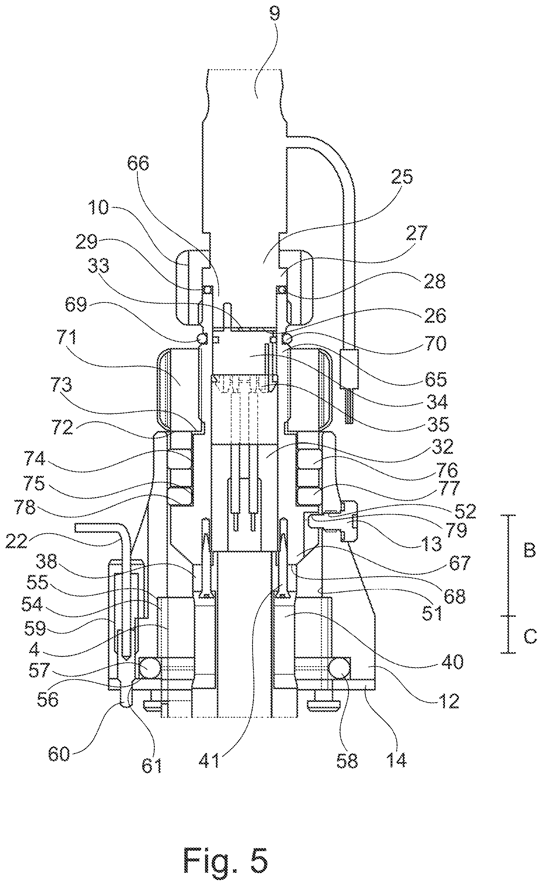

In der Figur 5 ist eine zweite Strahlereinheit dargestellt. Wie in dem ersten Beispiel gezeigt wurde, weist die zylindrische Buchse 25 des elektrischen Anschlusses 9 nahe ihrem strahlernahen Ende 26 den radialsymmetrischen Vorsprung 27 mit der strahlernahen Schulter 28 auf. In Axialrichtung unterhalb dieser Schulter 28 wird der O-Ring 29 in Anlage gebracht, an den sich wiederrum in Axialrichtung ein rotationssymmetrisches Steckerelement 65, welches eine durchgehende zentrale Öffnung 66 aufweist, anschließt. Dabei wird die, in die Öffnung 66 aufgenommene Buchse 25 an dem Steckerelement 65 mittels der Überwurfmutter 10 befestigt, die einen oberen Teil des Steckerelements 65, den O-Ring 29 und den Vorsprung 27 umgibt. Von unten schließt sich in der Öffnung 66 der zylindrische Verlängerungsadapter 32 mit dem am strahlerfernen Ende 33 liegenden Stecker 34, der den Keramiksockel 35 aufweist, an.

Ebenfalls wie in dem vorhergehenden Beispiel erläutert, wird das Steckerelement 65 an einem strahlernahen Ende 67, an einer strahlernahen Unterseite 68 mit dem Verlängerungsadapter 32 verschraubt. Dazu weist der Verlängerungsadapter 32 in Axialrichtung unterhalb des Steckerelements 65 einen radialen Vorsprung 38 mit Schulter 39 auf, der sich axial bis zum Ende des Verlängerungsadapters 32 erstreckt und dessen Schulter 39 in Anlage mit der strahlernahen Unterseite 68 des Steckerelements 65 steht. In Axialrichtung kurz unter dem Vorsprung 38 weist der Verlängerungsadapter 32 in seiner äußeren Wand zwei gegenüberliegende Einschnitte 40 auf. Diese in Axialrichtung länglichen Einschnitte 40 weisen eine Abmessung auf, die mit etwas Spiel der Höhe und Breite der Befestigungsschraube 41 entspricht, so dass das Einbringen der Schraube 41 in den Einschnitt 40 zum axialen Befestigen möglich ist. Zum Festschrauben weist der Verlängerungsadapter 32 eine axiale Bohrung pro Einschnitt 40 auf, die sich auch in das Steckerelement 65 von unter her erstreckt.

In Axialrichtung unterhalb der ersten Überwurfmutter 10 weist das Steckerelement 65 eine außenliegende ringförmige Nut 69 auf, in die ein O-Ring 70 aufgenommen ist. In Axialrichtung darunterliegend ist eine weitere Überwurfmutter 71 vorgesehen. Die Überwurfmutter 71 ist dabei mit ihrer strahlernahen Stirnseite 72 in Anlage zu einem ersten Absatz 73 des Steckerelements 65 angeordnet. Dieser erste Absatz 73 weist einen größeren Radius als der obere Teil des Steckerelements 65 und im Zusammenspiel mit einem Einsatz zwei radialsymmetrische beabstandete Nuten 74, 75 auf, in denen jeweils ein O-Ring 76, 77 platziert ist. In Anlage an den unteren O-Ring 77 schließt sich in Axialrichtung ein zweiter Absatz 78 mit erneut größerem Radius an. Dabei wird das Steckerelement 65 von dem ersten Absatz 73 ausgehend vom Kopfstück 12 radial umgegeben, wobei der Innendurchmesser des Kopfstücks 12 mit etwas Spiel dem Außendurchmesser des Steckerelements 65 nach dem zweiten Absatz 78 entspricht. Die O-Ringe 76, 77 bilden somit eine radial-statische Abdichtung zwischen dem Steckerelement 65 und dem Kopfstück 12.

In Axialrichtung daran anschließend überragt das Kopfstück 12 das Steckerelement 65 und umgibt einen oberen Teil des Verlängerungsadapters 32 bzw. des Hüllrohrs 4.

Unterhalb der Überwurfmutter 71 läuft das Kopfstück 12 in dem Bereich B kegelartig aus. Anschließend an den Bereich B weist der untere Teil C des Kopfstücks 12 einen konstanten Radius auf. In der oberen Hälfte des Bereichs B ist die seitliche, radiale Gewindebohrung 52 vorgesehen, die das Kopfstück 12 durchsetzt. In Verlängerung der radialen Gewindebohrung 52 weist das Steckerelement 65 einen länglichen Einschnitt 79 in der äußeren Oberfläche auf, der sich bis zum strahlernahen Ende 67 des Steckerelements 65 erstreckt. Die Stiftschraube 13 durchsetzt die Gewindebohrung 52 und den Einschnitt 79 um das Verdrehen des Strahlers gegenüber dem Kopfstück 12 zu verhindern.

Weiterhin weist, wie bei dem vorherigen Beispiel, die Öffnung 51 des Kopfstücks 12 in der unteren Hälfte des kegelartigen Bereichs B den Absatz 54 auf. Dieser Absatz 54 bildet die radialsymmetrische strahlernahe Schulter 55 aus, an die sich das Hüllrohr 4 von unten her anschließt. Dabei weist das Hüllrohr 4 den Außenradius auf, der wesentlich größer ist als der Außenradius des im oberen Teil umgebenen Verlängerungsadapters 32. Zur Befestigung des rotationssymmetrischen Hüllrohrs 4 ist auf einer strahlernahen Stirnseite 56 des Kopfstücks 12, innenliegend, der ringförmiger Einschnitt 57 vorgesehen, der im Zusammenspiel mit der Bodenplatte 14, eine ringförmige Nut für die Aufnahme eines abdichtenden innenliegenden O-Rings 58 bildet.

Um den Drehverschluss bezüglich Rotation zu sichern, ist außenliegend am Kopfstück 12 die Rastvorrichtung 22 vorgesehen. Diese Rastvorrichtung 22 weist die Schraubenfeder 59 und den durch die Schraubenfeder 59 vorgespannten Raststift 60 auf, der im gezeigten, nicht arretierten Zustand durch die Bohrung 61 in der Bodenplatte 14 hindurchragt und deutlich vorsteht.

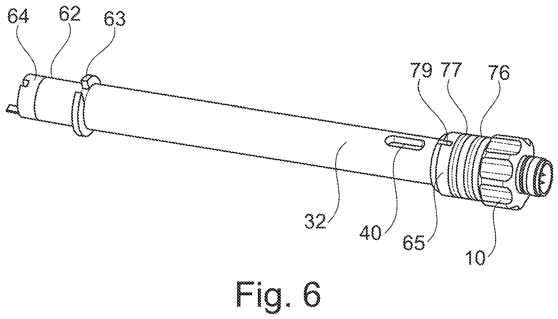

Die Fig. 6 zeigt die räumliche Ansicht der Strahlereinheit aus Figur 5 ohne elektrischen Anschluss und Kopfstück. Im oberen Teil deutlich zu erkennen sind in Axialrichtung unterhalb der Überwurfmutter 10 die angeordneten O-Ringe 76, 77, der Einschnitt 79 des Steckerelements 65 und der Einschnitt 40 des Verlängerungsadapters 32. Weiterhin ist vor dem strahlernahen Ende 62 der Zentrierring 63 gezeigt, der den Verlängerungsadapter 32 gegenüber dem hier nicht gezeigten Hüllrohr zentriert. Der Anschluss 64 für einen UV-Strahler befindet sich an dem strahlernahen Ende 62 des Verlängerungsadapters 32. Hierbei ist anzumerken, dass abhängig von dem gewünschten Modulaufbau, die Verlängerungsadapterlänge beliebig angepasst werden kann.

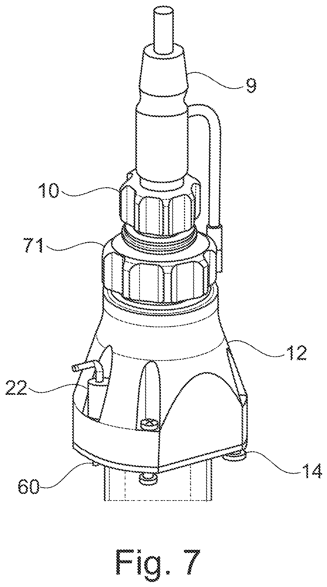

Fig. 7 zeigt die räumliche Darstellung des Beispiel aus Fig.5. In Axialrichtung unterhalb des elektrischen Anschlusses 9 sind die erste und die zweite Überwurfmutter 10, 71 dargestellt. Darunter schließt das kegelförmige Kopfstück 12 mit verschraubter Bodenplatte 14 an. Weiterhin ist die Rastvorrichtung 22 mit dem Raststift 60 gezeigt.

Die UV-Strahlermodule weisen Strahlereinheiten 2 auf, die sich mittels des Drehverschlusses einfach und schnell montieren bzw. demontieren lassen. Zum Schließen des Drehverschlusses werden das Kopfstück 12 und der Modulrahmen 5 mit ihren Enden parallel einander zugeführt, so dass die Hinterschneidungen der Muttern 18 unter die Öffnungen 20 greifen und durch Verdrehen der beiden Elemente zueinander, in der Ebene, die Gewindehülsen 17 der Schrauben 15 im schlitzartigen Bereich 21 der Öffnung einen Verschluss in Axialrichtung erzielen. Weiterhin ist der Drehverschluss mit der Rastvorrichtung 22 gegen Verdrehung gesichert. Dazu wird der federvorgespannte Raststift 60 der Rastvorrichtung 22 bei dem Zueinanderführen des Kopfstücks 12 und des Modulrahmens 5 nach oben gespannt, so dass bei dem Schließen des Drehverschlusses der Raststift 60 in die Indexbohrung 23 des Modulrahmens 5 einrastet. Weiterhin ist durch die Anordnung der O-Ringe 29, 45, 49, 58, 70, 76, 77 eine radial-statische Abdichtung des Hüllrohrs 4 gegeben.

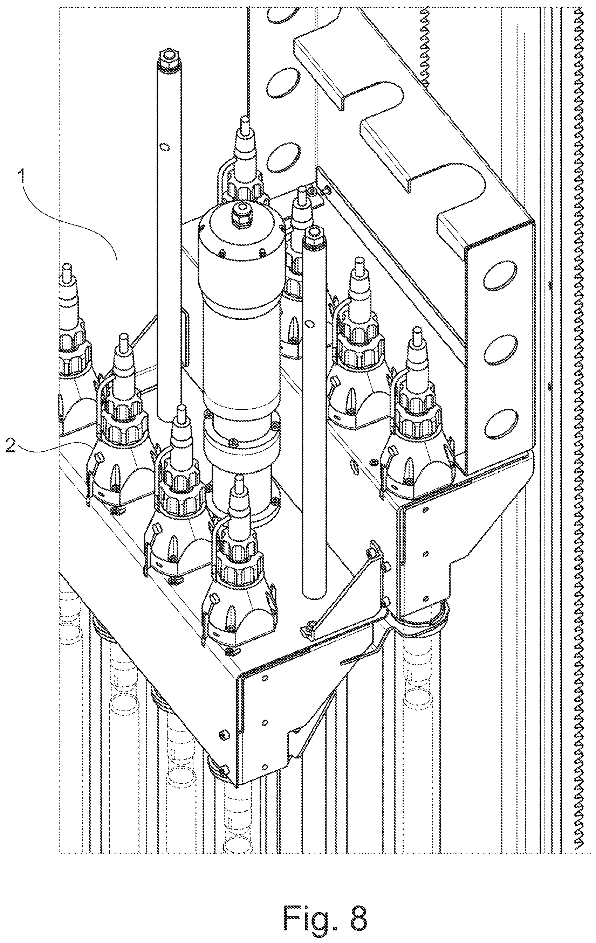

Figur 8 zeigt ein Ausführungsbeispiel des erfindungsgemäßen Strahlermoduls 1. Wie in Fig. 1 ist ein Strahlermodul 1 mit acht parallel, in zwei Reihen angeordneten Strahlereinheiten 2 einer UV-Wasserbehandlungsanlage zu sehen, wobei die Strahlereinheiten 2 vorzugsweise unter einem Winkel von 45° zur Wasseroberfläche positioniert werden. Die Kopfteile der Strahlereinheiten 2 entsprechen im Wesentlichen denen der Figur 5 bis auf die Befestigungseinrichtung und die Rastvorrichtung.

Eine Rastvorrichtung ist nicht vorgesehen. Die gezeigte Befestigungseinrichtung wird im Detail anhand der folgenden Figuren beschrieben.

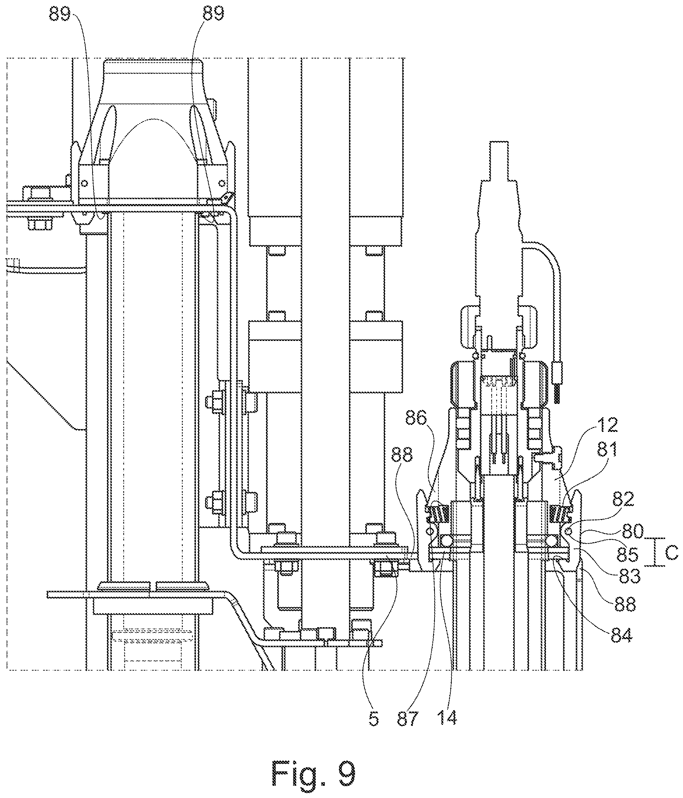

Figur 9 zeigt einen Längsschnitt des Strahlermoduls 1 aus Figur 8. Der Aufbau des Kopfteils entspricht im Wesentlichen dem aus Figur 5 bis auf die Befestigungseinrichtung und die nicht vorhandene Rastvorrichtung. Die Befestigungseinrichtung weist zwei Befestigungselemente 80 mit jeweils einem Federelement 81, einem Stift 82 und einem Haken 83 mit einer Hinterschneidung 84 und einer Öffnung 85 auf. Zur Befestigung der Befestigungselemente 80 am Kopfteil weist das Kopfstück 12 zwei gegenüberliegende Einschnitte 86 in Abschnitt C auf, die sich über die gesamte Höhe des Abschnitts C erstrecken. Am strahlerfernen Ende der Einschnitte 86 setzten sich die Einschnitte 86 jeweils in Form eines zylindrischen Ausschnitts 87 radial nach innen fort. Diese zylindrischen Ausschnitte 87 nehmen jeweils das Federelement 81 auf, mit dem jeweils der Haken 83 vorgespannt wird. Zur Lagerung des Hakens 83 im Kopfstück 12 ist die Öffnung 85 des Hakens 83 quer zum Haken 83 angeordnet, so dass der Stift 82 sowohl die Öffnung 85 als auch eine an dem jeweiligen Ende anschließende Öffnung des Kopfstücks 12 durchstoßen kann. Der Stift 82 dient somit als Lagerung des Hakens im Kopfstück 12 und bildet eine Drehachse des Hakens 83. Das Federelement 81, welches von dem Ausschnitt 87 des Kopfstücks 12 auf der einen Seite aufgenommen und mit dem anderen Ende mit dem oberen Teil des Hakens 83 verbunden ist, spannt den Haken 83 am oberen, strahlerfernen Ende nach außen tangential vor. Die Hinterschneidung 84 des Hakens 83, die nach innen zeigt, wird somit nach innen tangential vorgespannt. Zur Befestigung der Befestigungselemente 80 mit dem Rahmen 5 sind zwei gegenüberliegende schlitzartige Öffnungen 88 im Rahmen 5 vorgesehen, wobei die Öffnungen 88 sich radial vom Kopfstück 12 weg erstrecken. Die Länge der Öffnungen 88 ist dabei größer als die Tiefe der Haken 83 auf Höhe der Hinterschneidung 84.

Bei dem hier gezeigten arretierten Zustand greifen die Haken 83 jeweils durch die Öffnung 88 im Rahmen 5, wobei die Hinterschneidung 84 unter den Rahmen 5 greift und dieser Zustand durch das Federelement 81 mit Vorspannung gehalten wird. Zusätzlich zu der Befestigungseinrichtung sind vier Stifte 89 vorgesehen, die das Kopfstück 12 im äußeren Abschnitt axial durchstoßen. Die Stifte 89 sind dabei um 45° versetzt gegenüber den Befestigungselementen 80 mit jeweils 90° Abstand zueinander angeordnet. Dabei ragen die Stifte 89 über die Bodenplatte 14 hinaus. Zur Sicherung sind als Gegenstück für die Stifte 89 vier nicht gezeigte Indexbohrungen in dem Rahmen 5 vorgesehen, die jeweils einen Stift 89 aufnehmen. Es ist vorgesehen, dass Schrauben als Stifte verwendet werden.

Durch das Stiften sowie die schlitzartigen Öffnungen 88 wird neben der axialen Befestigung auch eine Rotation und eine Translation der Strahlereinheit 2 gegenüber dem Rahmen 5 verhindert. Zum Lösen sowie zum Befestigung der Strahlereinheit 2 sind die oberen, strahlerfernen Enden der Haken 83 entgegen der Federkraft des Federelements 81 gegeneinander zu drücken, so dass die Hinterschneidungen 84 der Haken 83 sich in radialer Richtung nach außen zur Öffnung 88 bewegen und die Strahlereinheit 2 in axialer Richtung freigegeben ist.

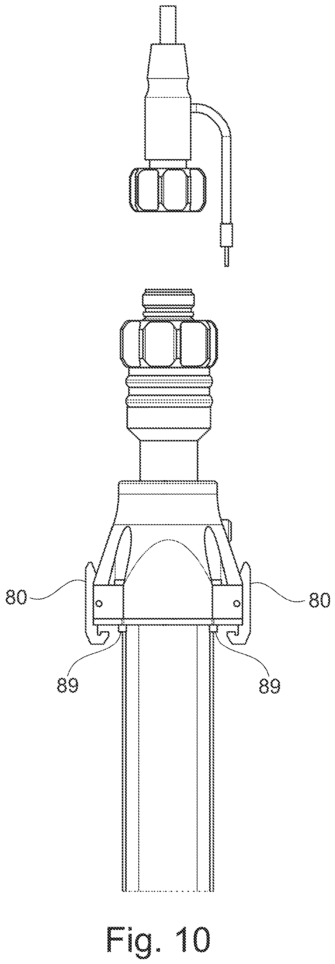

Figur 10 zeigt die Strahlereinheit 2 aus Figur 8 und 9 in räumlicher Darstellung. Gut zu erkennen sind die Befestigungselemente 80 und die Stifte 89, deren Kombination eine sichere und schnell zu lösende Befestigung der Strahlereinheit 2 im Strahlermodul 1 gewährleisten.

### Bezugszeichen

1. Strahlermodul
2. Strahlereinheit
3. UV-Strahler
4. Hüllrohr
5. Rahmen
6. Längsstreben
7. Antrieb
8. Reinigungsvorrichtung
9. elektrischer Anschluss
10. Überwurfmutter
11. Überwurfmutter
12. Kopfstück
13. Stiftschraube
14. Bodenplatte
15. Schrauben
16. Schraubenkopf
17. Gewindehülse
18. Mutter
19. Ausschnitt
20. Öffnung
21. Schlitz
22. Rastvorrichtung
23. Indexbohrung
24. Masseanschluss
25. Buchse
26. Strahlernahes Ende der Buchse
27. Vorsprung
28. Strahlernahe Schulter
29. O-Ring
30. Steckerelement
31. Öffnung
32. Verlängerungsadapter
33. Strahlerfernes Ende des Verlängerungsadapters
34. Stecker
35. Keramiksockel
36. Strahlernahes Ende des Steckerelements
37. Strahlernahe Unterseite des Steckerelements
38. Vorsprung
39. Schulter
40. Einschnitte
41. Befestigungsschraube
42. Vorsprung
43. Vorsprung
44. Nut
45. O-Ring
46. strahlernahe Schulter des zweiten Vorsprungs
47. strahlerferne Schulter des zweiten Vorsprungs
48. Nut
49. O-Ring
50. strahlerferne Stirnseite des Kopfstücks
51. Öffnung
52. Gewindebohrung
53. Einschnitt
54. Absatz
55. Strahlernahe Schulter des Absatz
56. Strahlernahen Stirnseite des Kopfstücks
57. Einschnitt
58. O-Rings
59. Schraubenfeder
60. Raststift
61. Bohrung
62. Strahlernahes Ende des Verlängerungsadapters
63. Zentrierring
64. Anschluss
65. Steckerelement
66. Öffnung
67. strahlernahes Ende des Steckerelements
68. strahlernahe Unterseite des Steckerelements
69. Nut
70. O-Ring
71. Überwurfmutter
72. Strahlernahe Stirnseite der Überwurfmutter
73. Absatz Steckerelement
74. Nut
75. Nut
76. O-Ring
77. O-Ring
78. Zweiter Absatz Steckerelement
79. Einschnitt
80. Befestigungselement
81. Federelement
82. Stift
83. Haken
84. Hinterschneidung
85. Öffnung
86. Einschnitt
87. Ausschnitt
88. Öffnung im Rahmen
89. Stift

## Patentansprüche

1. UV-Strahlermodul (1) mit einem Rahmen (5) und mit wenigstens zwei Strahlereinheiten (2), wobei jede Strahlereinheit (2) einen in einer Axialrichtung sich erstreckenden UV-Strahler (3), ein den UV-Strahler (3) umgebendes Hüllrohr (4), elektrische Anschlüsse (9) und ein Kopfteil zur Befestigung der Strahlereinheit (2) an dem Rahmen (5) aufweist, wobei für jede Strahlereinheit (2) eine Befestigungseinrichtung vorgesehen ist, mit der die Strahlereinheit (2) im Bereich des Kopfteils mit dem Rahmen (5) lösbar verbindbar ist, wobei der Rahmen (5) Öffnungen (20, 88) zur Aufnahme der Befestigungselemente aufweist, **dadurch gekennzeichnet, dass** die Befestigungselemente einen Haken (83) aufweisen.

2. UV-Strahlermodul (1) nach einem der vorhergehenden Ansprüche, **dadurch gekennzeichnet, dass** der Haken (83) um eine Drehachse parallel zum Rahmen (5) drehbar gelagert und in eine Raststellung federvorgespannt ist.

3. UV-Strahlermodul (1) nach einem der vorhergehenden Ansprüche, **dadurch gekennzeichnet, dass** die Öffnungen (88) schlitzartig ausgebildet sind.

4. UV-Strahlermodul (1) nach einem der vorhergehenden Ansprüche, **dadurch gekennzeichnet, dass** eine Vorrichtung vorgesehen ist, die das Kopfteil in der Betriebsstellung sichert und wenigstens einen Stift (89) und eine Indexbohrung umfasst.

5. UV-Strahlermodul (1) nach einem der vorhergehenden Ansprüche, **dadurch gekennzeichnet, dass** das Einsetzen der Strahlereinheit (2) durch Betätigung des Hakens entgegen der Federkraft, Einführen des Hüllrohres (4) in eine Öffnung des Rahmens (5) und in Axialrichtung bis zu einem Anschlag und dann durch Lösen der Betätigung des Hakens bewirkbar ist.

## Claims

1. UV lamp module (1) with a frame (5) and with at least two lamp units (2), whereby each lamp unit (2) features a UV lamp (3), extending in an axial direction, a cladding tube (4) surrounding the UV lamp (3), electrical connections (9) and a head part for attachment of the lamp unit (2) to the frame (5), wherein for each lamp unit (2) a fastening device is provided, with which the lamp unit (2) is detachably connectable to the frame (5) in the region of the head part, wherein the frame (5) has openings (20, 88) for receiving the fastening elements, **characterised in that** the fastening elements feature a hook (83).

2. UV lamp module (1) according to any of the preceding claims, **characterised in that** the hook (83) is rotatably mounted about an axis of rotation parallel to the frame (5) and spring preloaded into a detent position.

3. UV lamp module (1) according to any of the preceding claims, **characterised in that** the openings (88) have a slot-like formation.

4. UV lamp module (1) according to any of the preceding claims, **characterised in that** a mechanism is provided which secures the head part in the operating position and includes at least one pin (89) and an index hole.

5. UV lamp module (1) according to any of the preceding claims, **characterised in that** the insertion of the lamp unit (2) is effected by the pressing of the hook against the spring force, inserting the cladding tube (4) in an opening of the frame (5) and in the axial direction up to a stop and then by releasing the pressing of the hook.

## Revendications

1. Module projecteur d'UV (1), comprenant un cadre (5) et au moins deux unités de projecteur (2), chaque unité de projecteur (2) possédant un projecteur d'UV (3) qui s'étend dans la direction axiale, un tube d'enveloppe (4) qui entoure le projecteur d'UV (3), des bornes électriques (9) et une partie de tête destinée à fixer l'unité de projecteur (2) au cadre (5), un dispositif de fixation étant présent pour chaque unité de projecteur (2), avec lequel l'unité de projecteur (2) peut être reliée de manière amovible au cadre (5) dans la zone de tête, le cadre (5) possédant des ouvertures (20, 88) destinées à accueillir les éléments de fixation, **caractérisé en ce que** les éléments de fixation possèdent un crochet (83).

2. Module projecteur d'UV (1) selon l'une des revendications précédentes, **caractérisé en ce que** le crochet (83) est monté à rotation autour d'un axe de rotation parallèle au cadre (5) et est précontraint par ressort dans une position d'encliquetage.

3. Module projecteur d'UV (1) selon l'une des revendications précédentes, **caractérisé en ce que** les ouvertures (88) sont réalisées en forme de fentes.

4. Module projecteur d'UV (1) selon l'une des revendications précédentes, **caractérisé par** la présence d'un arrangement qui bloque la partie de tête dans la position de fonctionnement et comporte au moins une broche (89) et un trou d'index.

5. Module projecteur d'UV (1) selon l'une des revendications précédentes, **caractérisé en ce que** la mise en place de l'unité de projecteur (2) est réalisée par actionnement du crochet contre la force de ressort, introduction du tube d'enveloppe (4) dans une ouverture du cadre (5) et dans la direction axiale jusqu'à une butée et ensuite par relâchement de l'actionnement du ressort.
